# EUROPÄISCHE PATENTSCHRIFT

(11) **EP 2 851 617 B1**
(45) Veröffentlichungstag und Bekanntmachung des Hinweises auf die Patenterteilung: **19.04.2017**
(21) Anmeldenummer: 14182326.0
(22) Anmeldetag: 26.08.2014
(51) Int. Cl.: F23J 13/02, F23J 13/04, F23L 17/04, F16L 27/12

(54) **Anschlussfuß für ein Kaminrohr und Justierverfahren**
Connecting foot for a chimney pipe and adjusting method
Patte de raccordement pour un conduit de cheminée et procédé d'ajustement

(30) Priorität: 23.09.2013 DE 102013110499
(43) Veröffentlichungstag der Anmeldung: 25.03.2015
(73) Patentinhaber: Schiedel GmbH, 4542 Nussbach (AT)
(72) Erfinder: Ovary, Ivan, 40339 Chlumec (CZ); Marek, Martin, 19700 Prague (CZ)
(74) Vertreter: Müller Schupfner & Partner Patent- und Rechtsanwaltspartnerschaft mbB

(56) Entgegenhaltungen:
- DE-U1- 9 300 996
- GB-A- 1 220 019
- GB-A- 2 235 971

## Beschreibung

Die Erfindung betrifft einen Anschlussfuß für ein Kaminrohr sowie ein Verfahren zum Justieren eines Zuluftstutzens eines Anschlussfußes.

Feuerstätten in Gebäuden, wie beispielsweise Kamine, Öfen, Gas- oder Ölfeuerstätten, müssen an ein üblicherweise senkrecht durch das Gebäude geführtes Kaminrohr angeschlossen werden. Raumluftunabhängige Feuerstätten weisen hierbei nicht nur einen Abgasanschluss zum Abführen von Abgasen, sondern auch einen Zuluftanschluss zum Zuführen von Zuluft auf. Zum Betreiben einer solchen raumluftunabhängigen Feuerstätte umfassen moderne Kaminsysteme dementsprechend ein Abgasrohr zum Abführen von Abgasen und ein Zuluftrohr oder einen Zuluftkanal, über das/den, üblicherweise parallel zu dem Abgasrohr, Zuluft im Gegenstrom geführt wird.

Die vielfältigen Ausführungsformen und Dimensionen von am Markt erhältlichen Feuerstätten weisen keine einheitlichen Lagen ihrer jeweiligen Zuluft- und Abgasanschlüsse auf. Es ist daher in der Regel erforderlich, bereits beim Einbau des Kaminrohres die genauen Abmessungen der Feuerstätte bzw. insbesondere die Lagen ihrer Anschlüsse zu kennen, oder der Anschluss ist nachträglich über Adaptereinrichtungen zu realisieren.

Insbesondere problematisch ist es, dass die Zuluftanschlüsse der Feuerstätten, welche sich üblicherweise in einem unteren Bereich, knapp oberhalb der Bodenoberfläche befinden, nicht in einer genormten Höhe oberhalb der Bodenoberfläche angeordnet sind.

DE 9300996 U1 offenbart eine Vorrichtung zum Ausgleichen von Rohrleitungslängen, wobei zwei gegeneinander telekopierbare Rohrhülsen mittels Blechstreifen und einer Bandschelle kraftschlüssig miteinander verspannt werden.

GB 2 235 971 A beschreibt zwei konzentrische Leitungen zum Zuführen von Luft und zum Abführen von Abgas von einer kraftstoffbetriebenen Wärmequelle in einem Gebäude.

Der Erfindung liegt die Aufgabe zugrunde, einen Anschlussfuß für ein Kaminrohr, an welchen auf einfache Weise unterschiedliche Feuerstätten angeschlossen werden können, und ein Verfahren zum komfortablen Justieren eines Zuluftstutzens zur Verfügung zu stellen.

Die Aufgabe wird erfindungsgemäß durch einen Anschlussfuß mit den Merkmalen des Anspruchs 1 und ein Verfahren mit den Merkmalen des Anspruchs 10 gelöst. Bevorzugte Ausgestaltungen sind in den abhängigen Ansprüchen sowie der nachfolgenden Beschreibung, insbesondere im Zusammenhang mit den beiliegenden Figuren, angegeben.

Der Anschlussfuß umfasst erfindungsgemäß ein Zuluftrohr bzw. eine Zuluftrohreinheit zum Zuführen von Zuluft und einen seitlichen Zuluftstutzen zum Anschließen einer seitlich einmündenden Zuluftleitung einer Feuerstätte. Das Zuluftrohr umfasst ein rohrförmiges Sockelelement mit einem Sockelbereich zum Abstützen an einer Bodenfläche und ein gegenüber dem Sockelelement teleskopierbares Anschlussrohrelement, an welchem der seitliche Zuluftstutzen ausgebildet ist.

Ein Grundgedanke der Erfindung kann darin gesehen werden, einen mit einem Kaminrohr koppelbaren Anschlussfuß bereit zu stellen, welcher einen seitlich, insbesondere radial, in ein Zuluftrohr einmündenden Zuluftstutzen aufweist, der höhenverstellbar gegenüber einem Sockelelement des Zuluftrohres angeordnet ist. Der Zuluftstutzen ist hierzu an einem relativ zu dem Sockelelement verlagerbaren, insbesondere anhebbaren und absenkbaren, Anschlussrohrelement angeordnet. Insbesondere ist das Anschlussrohrelement verschiebbar an dem Sockelelement gelagert. Anschlussrohrelement und Sockelelement sind vorzugweise koaxial zueinander angeordnet und zweckmäßigerweise zumindest teilweise überlappend. Das Anschlussrohrelement kann insbesondere entlang seiner Längsachse bzw. entlang der Längsachse des Zuluftrohres oder des Kaminrohres verschiebbar am Sockelelement gelagert sein.

Die Höhenverstellung des Zuluftstutzens erfolgt durch ein Verlagern oder Bewegen des Anschlussrohrelements gegenüber dem Sockelelement, insbesondere durch ein Anheben oder Absenken des Anschlussrohrelements gegenüber dem Sockelelement. Durch das Anheben bzw. Absenken des Anschlussrohrelements lässt sich der in einer bestimmten Position an dem Anschlussrohrelement vorgesehene Zuluftstutzen in der gewünschten Höhenlage positionieren. Auf diese Weise lässt sich bei einem eingebauten Anschlussfuß, welcher sich vorzugsweise nach unten bis zu einer Grund- oder Aufstandsfläche erstreckt, die Höhenlage des Zuluftstutzens relativ zu der Grundfläche verändern.

Für eine besonders komfortable Höhenverstellung des Zuluftstutzens ist vorgesehen, dass das Sockelelement und das Anschlussrohrelement über eine spiralförmige Führungseinrichtung miteinander gekoppelt sind, wobei das Sockelelement drehbar gegenüber dem Anschlusselement gelagert ist und durch Drehen des Sockelelements gegenüber dem Anschlussrohrelement eine Höhenverstellung, also eine Axialbewegung, des Anschlussrohrelements bewirkbar ist. Die Führungseinrichtung kann insbesondere eine spiralförmige Ausnehmung oder Vertiefung in dem Sockelelement oder dem Anschlussrohrelement umfassen. Zur Höhenverstellung ist an dem jeweils anderen Element ein korrespondierendes Eingriffsmittel, vorzugsweise der Zuluftstutzen, vorgesehen, welches mit der Ausnehmung oder Vertiefung in Eingriff ist. Durch Drehen des Sockelelements bewegt sich das Eingriffselement entlang der spiralförmigen Ausnehmung oder Vertiefung und bewirkt auf diese Weise eine Höhenverstellung des Anschlussrohrelements zusammen mit seinem Zuluftstutzen.

Eine Höhenverstellung des Zuluftstutzens über einen weiten Bereich und insbesondere bis möglichst nahe an eine untere Bodenfläche kann dadurch erreicht werden, dass das Sockelelement eine Durchtrittsöffnung für den Zuluftstutzen aufweist. Das Sockelelement kann sich auf diese Weise mit dem Anschlussrohrelement derart überlappen, dass eine Oberkante des Sockelelements über den Zuluftstutzen hinausragt. Der Zuluftstutzen ist im Bereich der Durchtrittsöffnung durch das Sockelelement hindurchgeführt. Das Sockelelement ist drehbar gegenüber dem Anschlussrohrelement gelagert und weist einen spiralförmig ansteigenden Führungsschlitz auf, in welchem der Zuluftstutzen geführt ist. Der Zuluftstutzen bildet hierbei ein Eingriffsmittel oder Eingriffselement in den spiralförmigen Führungsschlitz. Führungsschlitz und Zuluftstutzen bilden eine Führungseinrichtung, über welche das Anschlussrohrelement und das Sockelelement miteinander gekoppelt sind. Durch Drehen des Sockelelements gegenüber dem Anschlussrohrelement erfolgt eine Höhenverstellung, also eine Axialbewegung, des Anschlussrohrelements, wobei sich der Zuluftstutzen entlang des Führungsschlitzes bewegt. Das Sockelelement kann auch als Drehhülse oder Steighülse bezeichnet werden.

In einer weiteren bevorzugten Ausführungsform der Erfindung ist eine Abdeckhülse vorgesehen, welche überlappend mit dem Sockelelement angeordnet ist und einen quer zu dem Führungsschlitz des Sockelelements verlaufenden Durchtrittsschlitz für den Zuluftstutzen aufweist. Die Abdeckhülse überdeckt den Führungsschlitz, so dass eine Abdeckung des Führungsschlitzes auch dann gewährleistet ist, wenn das Anschlussrohrelement den Führungsschlitz aufgrund eines Anhebens gegenüber dem Sockelelement nicht oder nicht vollständig überdeckt. Die Abdeckhülse ermöglicht somit, das Anschlussrohrelement in einem weiten Bereich verstellen zu können, wobei insbesondere auch eine Anordnung des Zuluftstutzens in einem bodennahen Bereich möglich ist. Dabei kann die axiale Verstellmöglichkeit des Zuluftstutzens insbesondere größer sein als ein minimaler Abstand des Zuluftstutzens von der Boden- bzw. Abstützfläche. Die Abdeckhülse kann innerhalb oder außerhalb des Sockelelements beziehungsweise der Drehhülse, vorzugsweise diese direkt berührend, angeordnet sein. Abdeckhülse und Sockelelement grenzen also radial aneinander an. Vorzugsweise gewährleistet die Abdeckhülse einen weitgehend gasdichten Verschluss des Führungsschlitzes. Der Durchtrittsschlitz verläuft vorzugsweise in Längsrichtung der Abdeckhülse und ist vorzugsweise einseitig, nach oben, offen. Der Durchtrittschlitz weist vorzugsweise einen runden, insbesondere kreisrunden Boden und insbesondere die Außenkontur eines "U" auf, wobei der Krümmungsradius des Bodens dem 1,0 - 1,5 fachen, vorzugsweise 1,01 - 1,3 fachen und besonders vorzugweise 1,01 - 1,2 fachen des Außenradius des Zuluftstutzens entspricht.

Zur Gewährleistung einer Abdeckung des Führungsschlitzes durch die Abdeckhülse bei unterschiedlichen Höhenlagen des Zuluftstutzens ist es bevorzugt, dass das Sockelelement und die Abdeckhülse relativ zueinander drehbar sind.

Die Abdeckhülse umfasst vorzugweise eine axiale Länge, welche mindestens der axialen Länge des spiralförmigen Führungsschlitzes des Sockelelements entspricht, wobei unter der axialen Länge des Führungsschlitzes der Abstand des unteren Endes von dem oberen Ende des Führungsschlitzes, in Axialrichtung des Sockelelements gesehen, zu verstehen ist. Vorzugsweise entspricht die axiale Länge, also die Ausdehnung in Axialrichtung, des Durchtrittsschlitzes mindestens der axialen Länge des Führungsschlitzes. Es ist bevorzugt, dass das Sockelelement im zusammengebauten Zustand des Anschlussfußes von außen möglichst wenig sichtbar ist. Hierzu ist das Sockelelement vorzugsweise innerhalb der Abdeckhülse aufgenommen bzw. die Abdeckhülse radial außerhalb des Sockelelements angeordnet. Zur Bereitstellung eines Zugangs zu dem Sockelelement, insbesondere zur Betätigung bzw. Drehung des Sockelelements, ist die Abdeckhülse vorzugsweise axial gegenüber dem Sockelelement bewegbar, insbesondere anhebbar. Für eine zuverlässige Lagerung der Abdeckhülse ist es bevorzugt, dass das Sockelelement an einem unteren Ende eine Aufstandsfläche für die Abdeckhülse bereitstellt. Die insbesondere ringförmige Aufstandsfläche kann beispielsweise als Bodenflansch ausgeführt sein, vorzugsweise als umlaufender Kragen, besonders bevorzugt als eine untere Abkantung des rohrförmigen Sockelelements.

In einer bevorzugten Ausführungsform ist das Sockelelement zumindest größtenteils innerhalb des Anschlussrohrelements angeordnet oder aufgenommen. Der an dem Anschlussrohrelement befestigte Zuluftstutzen ragt hierbei vorzugsweise von außen in den Führungsschlitz des Sockelelements hinein. Der Vorteil dieser Ausführungsform besteht insbesondere darin, dass eine Kontakt- oder Führungsfläche zum Kontaktieren bzw. Führen der Abdeckhülse und/oder des Sockelelements an einer Innenmantelfläche des Anschlussrohrelements ausgebildet sein kann. Somit kann die Außenmantelfläche des Anschlussrohrelements frei gestaltet werden. Unter einem "Hineinragen" des Zuluftstutzens in den Führungsschlitz kann insbesondere auch ein vollständiges Hindurchragen durch den Führungsschlitz verstanden werden. Der Zuluftstutzen erstreckt sich vorzugsweise von einer Wandung des Anschlussrohrelements sowohl nach innen als auch nach außen.

Des Weiteren ist es erfindungsgemäß bevorzugt, dass die Abdeckhülse innerhalb des Anschlussrohrelements angeordnet ist und dass der Zuluftstutzen in die Durchtrittsöffnung des Abdeckelements hineinragt bzw. durch diese hindurchragt. Vorzugsweise sind sowohl das Sockelelement als auch die Abdeckhülse radial innerhalb des Anschlussrohrelements angeordnet, so dass der untere Abschnitt des Anschlussrohrelements, in welchem der Zuluftstutzen angeordnet ist, von außen weder von dem Sockelelement noch von der Abdeckhülse überdeckt ist.

Zum Anschließen des Anschlussfußes an einen sogenannten Luft-Abgas-Schacht eines Kamins kann oberhalb des Anschlussrohrelements ein Luft-Abgas-Rohrstück bzw. eine Luft-Abgas-Rohreinheit angeordnet sein, welches ein Außenrohr zum Zuführen von Zuluft, ein Innenrohr zum Abführen von Abgas sowie einen seitlich, insbesondere radial, in das Innenrohr einmündenden Abgasstutzen zum Anschließen einer Abgasleitung einer Feuerstätte aufweist. Die Zuluft wird vorzugsweise in einem Ringraum zwischen Innenrohr und Außenrohr geführt. Ein Anschlussfuß gemäß dieser Ausführungsform stellt folglich sowohl eine Anschlussmöglichkeit für eine Zuluftleitung als auch für eine Abgasleitung einer Feuerstätte bereit. Durch die Höhenverstellbarkeit des Zuluftstutzens lässt sich nicht nur der Abstand des Zuluftstutzens von der Bodenfläche, sondern vorzugsweise auch der Abstand des Zuluftstutzens vom Abgasstutzen einstellen. Der Anschlussfuß lässt sich an ein Kaminrohr mit einem äußeren Zuluftrohr und einem darin koaxial aufgenommenen Abgasrohr anschließen.

Vorzugsweise ist das Luft-Abgas-Rohrstück, welches auch als eine Luft-Abgas-Rohreinheit bezeichnet werden kann, relativ zu dem Anschlussrohrelement axial verschiebbar gelagert. Das Luft-Abgas-Rohrstück und das Anschlussrohrelement sind vorzugsweise ineinander gesteckt, wobei insbesondere eine teilweise radial überlappende Anordnung realisiert ist. Zur Fixierung des Anschlussrohrelements an dem Luft-Abgas-Rohrstück ist vorzugsweise mindestens ein Befestigungselement vorhanden, wobei das Luft-Abgas-Rohrstück vorzugsweise in unterschiedlichen Positionen am Anschlussrohrelement festlegbar ist. Die axial verschiebbare Lagerung des Luft-Abgas-Rohrstücks gegenüber dem Anschlussrohrelement ermöglicht eine Höhenverstellung des Abgasstutzens relativ zu dem Zuluftstutzen und/oder relativ zur Bodenfläche.

Gemäß einer weiteren bevorzugten Ausführungsform ist vorgesehen, dass das Innenrohr oberhalb des Zuluftstutzens endet und nach unten hin, insbesondere durch den Abgasstutzen und/oder eine Rohrumlenkung, verschlossen ist. Vorzugsweise ist an einem unteren Ende des Innenrohres, welches ein Abgasrohr des Anschlussfußes bildet, eine Umlenkung vorgesehen, welche in den seitlich einmündenden Abgasstutzen mündet. Unterhalb des unteren Endes des Innenrohres ist im Bereich des Anschlussrohrelements ein Sammelvolumen für die Zuluft ausgebildet, in welches die Zuluft von dem ringförmigen Zuluftkanal zwischen Innenrohr und Außenrohr einströmen kann.

Erfindungsgemäß ist es bevorzugt, dass ein zwischen dem Innenrohr und dem Außenrohr gebildeter Zuluftschacht oder Zuluftkanal sich unterhalb des Innenrohres radial nach innen erweitert. Der gegenüber dem Ringkanal nach innen verbreiterte Zuluftschacht unterhalb des Innen- bzw. Abgasrohres gewährleistet eine zuverlässige Einströmung von Zuluft in den vorzugsweise ausgehend von dem Anschlussrohrelement nach innen ragenden Zuluftstutzen.

Die Höhe der Zuluftleitung vom Boden lässt sich vorzugsweise zwischen 5 und 80 Zentimetern, besonders bevorzugt zwischen 10 und 40 Zentimetern einstellen. Die Höhe der Abgasleitung vom Boden lässt sich vorzugsweise zwischen 40 und 200 Zentimetern, besonders bevorzugt zwischen 80 und 120 Zentimetern einstellen. Für eine besonders weite Verstellmöglichkeit kann das Innenrohr und/oder das Anschlussrohrelement gekürzt werden.

Die Erfindung betrifft des Weiteren ein Verfahren zum Justieren eines Zuluftstutzens, welcher seitlich in ein Zuluftrohr eines Anschlussfußes für ein Kaminrohr einmündet. Erfindungsgemäß ist vorgesehen, dass der Zuluftstutzen dadurch justiert, d. h. in seiner Höhe verstellt wird, dass ein rohrförmiges Sockelelement relativ zu einem Anschlussrohrelement, an welchem der Zuluftstutzen ausgebildet ist, gedreht wird, wobei das Sockelelement und das Anschlussrohrelement über eine spiralförmige Führungseinrichtung miteinander gekoppelt sind, so dass eine Höhenverstellung des Anschlussrohrelements relativ zu dem Sockelelement erfolgt. Es werden die im Zusammenhang mit dem Anschlussfuß dargestellten Vorteile erzielt. Insbesondere lässt sich der Zuluftstutzen einfach und präzise höhenverstellen. Das Verfahren bezieht sich insbesondere auf das Justieren eines Zuluftstutzens eines erfindungsgemäßen Anschlussfußes. Es versteht sich, dass sämtliche weitere Vorteile und Merkmale des erfindungsgemäßen Anschlussfußes in dem erfindungsgemäßen Verfahren Anwendung finden können.

Die Erfindung wird nachfolgend anhand bevorzugter und beispielhafter Ausführungsformen, welche in den beiliegenden Figuren schematisch dargestellt sind, weiter beschrieben. In den Figuren zeigt
- Figur 1:: eine Explosionsdarstellung eines erfindungsgemäßen Anschlussfußes;
- Figur 2:: Außenansichten eines Anschlussfußes in unterschiedlichen zusammengebauten Zuständen;
- Figur 3:: eine teilweise geschnittene Ansicht eines Anschlussfußes;
- Figur 4:: eine Außenansicht eines Anschlussfußes mit einer angeschlossenen Feuerstätte;
- Figur 5:: eine Ansicht eines Anschlussfußes gemäß Figur 4 mit einem Schnitt in einem oberen Bereich zur Visualisierung des Abgasstutzens und des Innenrohrs; und
- Figur 6:: eine Ansicht eines Anschlussfußes gemäß Figur 4 mit einem Schnitt in einem unteren Bereich zur Visualisierung des Zuluftstutzens.

Gleiche oder gleich wirkende Element sind in sämtlichen Figuren mit denselben Bezugszeichen gekennzeichnet. Die anhand der einzelnen Figuren beschriebenen Merkmale können grundsätzlich auch miteinander kombiniert werden.

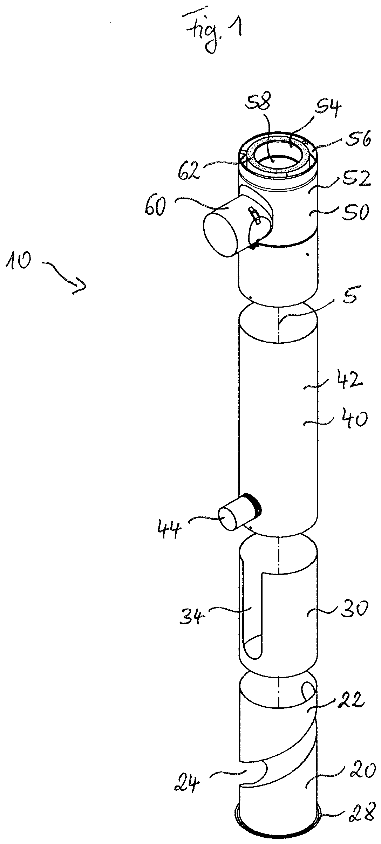

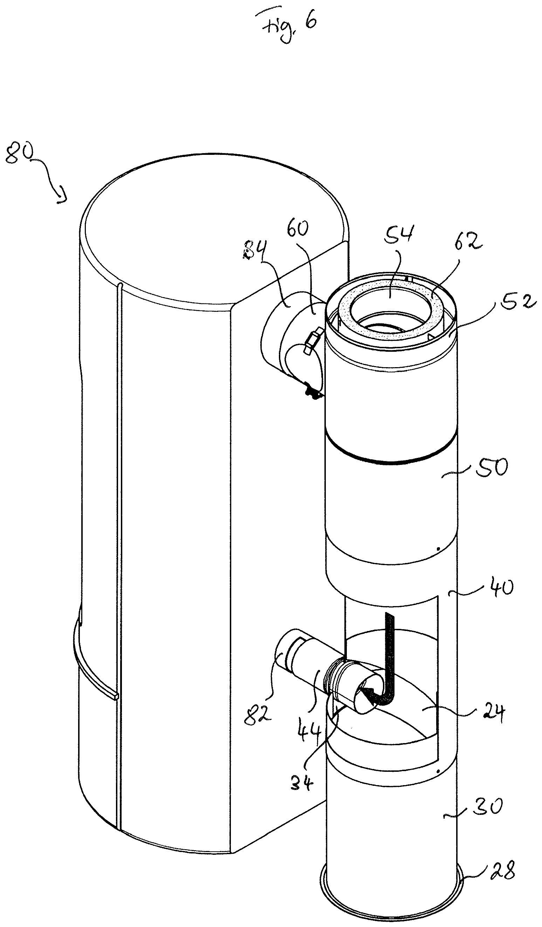

Ein erfindungsgemäßer Anschlussfuß 10 für ein Kaminrohr wird nachfolgend mit Bezug auf die Figuren 1 bis 6 beschrieben. Wie in Figur 1 dargestellt, umfasst der Anschlussfuß 10 ein Sockelelement 20, eine Abdeckhülse 30, ein Anschlussrohrelement 40 und ein Luft-Abgas-Rohrstück 50, welche jeweils einen rohrförmigen Grundkörper aufweisen und koaxial zueinander entlang einer Längsachse 5 angeordnet sind. Sockelelement 20, Abdeckhülse 30 und Anschlussrohrelement 40 sind ineinander gesteckt und weisen hierzu entsprechend unterschiedliche Durchmesser auf. Das Sockelelement 20 bildet eine Tragstruktur oder eine tragende Schale und trägt die Abdeckhülse 30 und/oder das Anschlussrohrelement 40. Das Sockelelement 20 ist zum Aufsetzen auf eine Bodenfläche vorgesehen und umfasst hierzu einen Sockelbereich 28, welcher einen sicheren Stand des Sockelelements 20 gewährleistet. Der Sockelbereich 28 ist als nach außen ragender, ringförmiger Kragen ausgebildet, dessen Unterseite eine Aufstandsfläche zum Aufsetzen auf den Boden und dessen Oberseite eine Abstützfläche für die Abdeckhülse 30 bildet. Die Abdeckhülse 30 ist um das Sockelelement 20 angeordnet, wobei eine Innenmantelfläche der Abdeckhülse 30 vorzugsweise eine Außenmantelfläche des Sockelelements 20 kontaktiert. Die Abdeckhülse 30 liegt aufgrund ihres Eigengewichts auf dem Bodensockel des Sockelelements 20 auf und ist gegenüber dem Sockelelement 20 in Längsrichtung, also entlang der Längsachse 5, und in Umfangsrichtung frei beweglich gelagert. Die Abdeckhülse 30 lässt sich somit manuell gegenüber dem Sockelelement 20 anheben und/oder drehen.

Das Anschlussrohrelement 40 ist um die Abdeckhülse 30 angeordnet, wobei eine Außenmantelfläche der Abdeckhülse 30 vorzugsweise eine Innenmantelfläche des Anschlussrohrelements 40 kontaktiert. Abdeckhülse 30 und Sockelelement 20 sind also innerhalb des Anschlussrohrelements 40 angeordnet, wobei sich die einzelnen Elemente jeweils in Radialrichtung kontaktieren. Das Anschlussrohrelement 40 ist gegenüber dem Sockelelement 20 teleskopierbar und vorzugsweise zwischen einer Grundstellung, in welcher das Sockelelement 20 vollständig innerhalb des Anschlussrohrelements 40 aufgenommen ist, und einer angehobenen Stellung, in welcher das Sockelelement 20 aus dem Anschlussrohrelement 40 herausragt, verstellbar.

Das Anschlussrohrelement 40 umfasst einen Rohrkörper 42, in welchen ein Zuluftstutzen 44 in radialer Richtung einmündet. Der Zuluftstutzen 44 erstreckt sich durch den Rohrkörper 42 hindurch. Er ragt nach außen über eine Außenmantelfläche des Rohrkörpers 42 und nach innen über eine Innenmantelfläche des Rohrkörpers 42 hervor. Der Zuluftstutzen 44 ist in einem unteren Bereich des Anschlussrohrelements 40 bzw. des Rohrkörpers 42, insbesondere innerhalb eines unteren Viertels des Anschlussrohrelements 40, angeordnet, wobei der Abstand zwischen einer Unterkante des Zuluftstutzens 44 und einer Unterkante des Rohrkörpers 42 im eingefahrenen Zustand des Sockelelements 20 vorzugsweise weniger als 50 Zentimeter, insbesondere weniger als 30 Zentimeter, besonders bevorzugt weniger als 15 Zentimeter beträgt. Hierdurch kann Zuluft in einem bodennahen Bereich in eine Feuerstätte eingeleitet werden.

Das innerhalb des Anschlussrohrelements 40 angeordnete Sockelelement 20 weist einen Rohrkörper 22 auf, in welchem ein spiralförmig ansteigender Führungsschlitz 24 ausgebildet ist. In montiertem Zustand des Anschlussfußes 10 ragt der Zuluftstutzen 44 in den Führungsschlitz 24 hinein und ist entlang des Führungsschlitzes 24 bewegbar. Führungsschlitz 24 und Zuluftstutzen 44 bilden einen Teleskopiermechanismus, wobei durch Drehen des Sockelelements 20 relativ zu dem Anschlussrohrelement 40 ein Ausfahren und Einfahren des Sockelelements 20 aus dem bzw. in das Anschlussrohrelement 40 bewirkt werden kann. Der Führungsschlitz 24 ist an seinen beiden Axialenden geschlossen. Die Enden des Führungsschlitzes 24 bilden einen unteren bzw. einen oberen Anschlag für den Zuluftstutzen 44.

Die innerhalb des Anschlussrohrelements 40 angeordnete bzw. anordbare Abdeckhülse 30 umfasst einen Durchtrittsschlitz 34 für den Zuluftstutzen 44. Der Zuluftstutzen 44 ragt durch den Durchtrittsschlitz 34 hindurch. Der Durchtrittsschlitz 34 erstreckt sich in Längsrichtung der Abdeckhülse 30 entlang der überwiegenden Länge der Abdeckhülse 30 und ist nach oben hin offen. Der nach unten geschlossene Durchtrittsschlitz 34 umfasst vorzugsweise einen gerundeten Bodenbereich, welcher an die äußere Form des Zuluftstutzens 44 angepasst ist. Die Breite des Durchtrittsschlitzes 34 entspricht in etwa der Breite des Zuluftstutzens 44, insbesondere der Breite des nach innen ragenden Bereichs des Zuluftstutzens 44. Die vorzugsweise zwischen dem Sockelelement 20 und dem Anschlussrohrelement 40 angeordnete Abdeckhülse 30 deckt den Führungsschlitz 24 gegenüber der Umgebung ab.

Das Sockelelement 20 weist ein unteres, geschlossenes Ende und ein oberes, offenes Ende auf. Abdeckhülse 30 und Anschlussrohrelement 40 sind jeweils an ihren beiden gegenüberliegenden Enden offen. Sockelelement 20, Abdeckhülse 30 und Anschlussrohrelement 40 bilden insgesamt ein Zuluftrohr 12 zum Leiten von Zuluft. Das aus mehreren Elementen zusammengesetzte Zuluftrohr 12 kann auch als Zuluftrohreinheit bezeichnet werden. Die Zuluft kann über den seitlich in das Zuluftrohr 12 einmündenden Zuluftstutzen 44 einer Feuerstätte zugeführt werden.

Anstelle der beschriebenen relativen Anordnung der Elemente "Sockelelement", "Abdeckhülse" und "Anschlussrohrelement" zueinander können auch andere Anordnungen gewählt werden. Beispielsweise können Sockelelement 20 und/oder Abdeckhülse 30 auch außerhalb des Anschlussrohrelements 40 angeordnet sein, wobei die gleiche Funktionalität gegeben ist. In diesem Fall ragt der äußere Bereich des Zuluftstutzens 44 durch den Führungsschlitz 24 bzw. den Durchtrittsschlitz 34 hindurch.

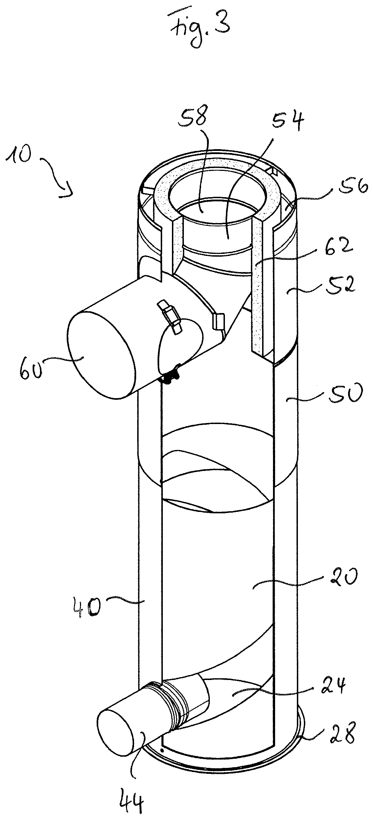

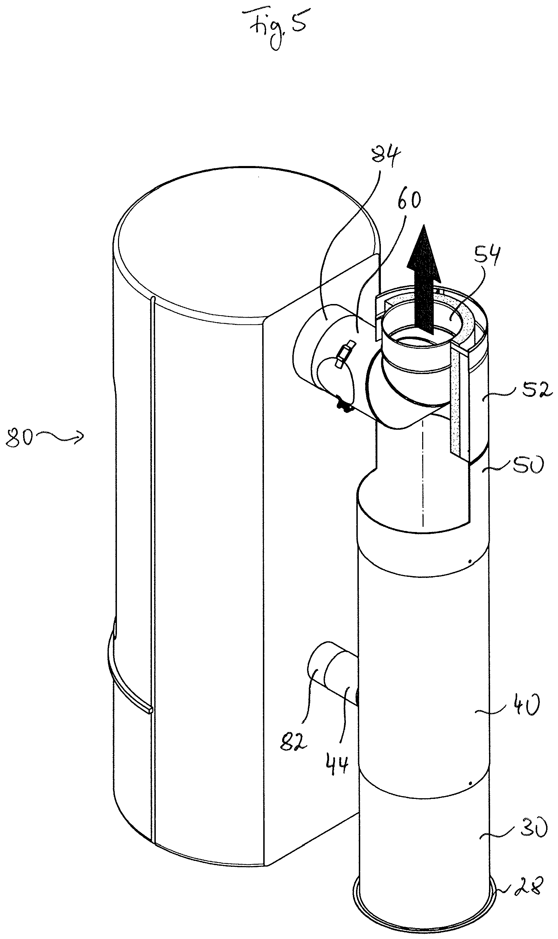

An ein oberes Ende des Anschlussrohrelements 40 ist ein Luft-Abgas-Rohrstück 50 angeschlossen, welches ein mit dem Rohrkörper 42 koppelbares Außenrohr 52 aufweist, welches einen weiteren Teil des Zuluftrohres 12 bildet. In einem oberen Bereich des Luft-Abgas-Rohrstücks 50 ist innerhalb des Außenrohres 52 ein Innenrohr 54 angeordnet, welches zum Ableiten von Abgasen bzw. Rauchgasen einer angeschlossenen Feuerstätte dient. Das Innenrohr 54 ist beabstandet zu dem Außenrohr 52 angeordnet, so dass zwischen dem Innenrohr 54 und dem Außenrohr 52 ein ringförmiger Zuluftschacht 56 gebildet ist, welcher sich unterhalb des Innenrohres 54 nach innen erweitert. Das Innenrohr 54 umschließt einen Abgasschacht 58, welcher gasdicht gegenüber dem Zuluftschacht 56 abgeschlossen ist. Zum Einleiten von Abgasen ist ein seitlich in das Innenrohr 54 einmündender Abgasstutzen 60 vorgesehen, welcher sich durch das Außenrohr 52 hindurch erstreckt und über eine Umlenkung mit dem Innenrohr verbunden ist, wie insbesondere in den Figuren 3 und 5 zu erkennen. Um das Innenrohr 54 ist eine Wärmeisolierschicht 62, beispielsweise Mineralwolle, angeordnet, welche innenseitig an den Zuluftschacht 56 angrenzt.

Das Anschlussrohrelement 40 kann so gestaltet sein, dass es sich in seinem oberen Bereich kürzen lässt, ohne dass die Funktionalität beeinträchtigt wird. Hierzu ist im oberen Bereich ein Kürzungsabschnitt vorgesehen, welcher in Axialrichtung einen gleichbleibenden Querschnitt aufweist. Alternativ oder zusätzlich kann das Luft-Abgas-Rohrstück 50 in einem unteren Bereich einen Kürzungsabschnitt aufweisen. Durch die Kürzungsmöglichkeit des Anschlussrohrelements 40 und/oder des Luft-Abgas-Rohrstücks 50 wird das Verstellintervall des Abgasstutzens 60 weiter vergrößert.

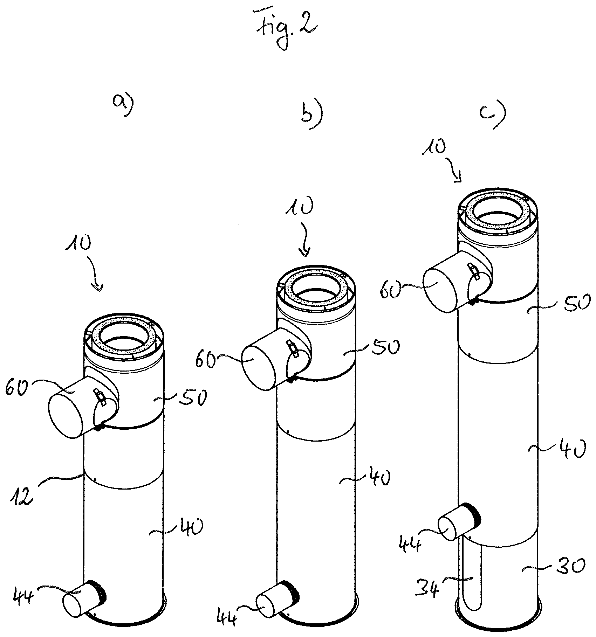

Die Figuren 2a bis 2c zeigen unterschiedliche Montagestellungen eines erfindungsgemäßen Anschlussfußes 10. In Figur 2a ist der Anschlussfuß 10 in einer Grundstellung dargestellt, in welcher der Zuluftstutzen 44 eine untere Endposition einnimmt. Das Sockelelement 20 ist vollständig in dem Anschlussrohrelement 40 aufgenommen. Der Abgasstutzen 60 befindet sich ebenfalls in einer unteren Endposition. In Figur 2b ist das Luft-Abgas-Rohrstück 50 gegenüber der Position in Figur 2a angehoben, so dass der Abgasstutzen 60 eine größere Höhe gegenüber dem Boden und/oder gegenüber dem Zuluftstutzen 44 aufweist. In Figur 2c ist schließlich die Einheit aus Anschlussrohrelement 40 und Luft-Abgas-Rohrstück 50 gegenüber dem Sockelelement 20 angehoben, so dass sowohl der Zuluftstutzen 44 als auch der Abgasstutzen 60 nach oben verschoben sind.

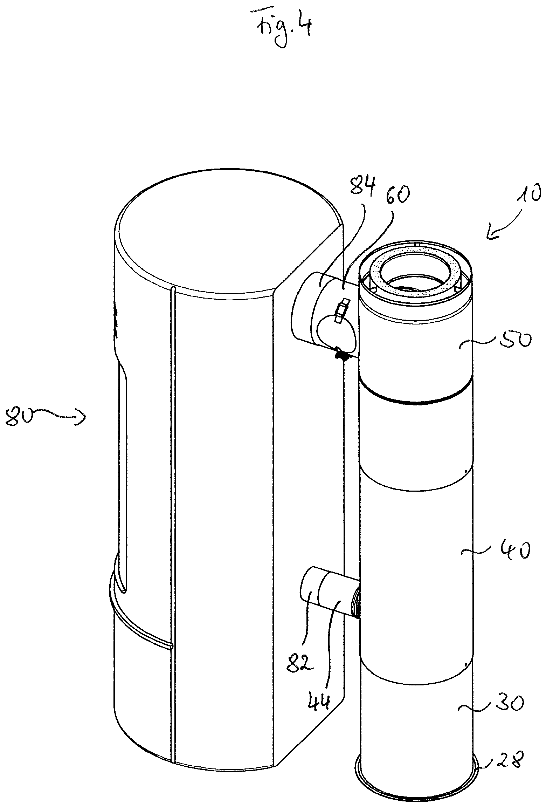

Die Figuren 4 bis 6 zeigen den Anschluss einer Feuerstätte 80 an einen erfindungsgemäßen Anschlussfuß 10. Die Feuerstätte 80 umfasst einen Zuluftanschluss mit einer vorzugsweise horizontal verlaufenden Zuluftleitung 82 sowie einen darüber angeordneten Abgasanschluss mit einer vorzugsweise horizontal verlaufenden Abgasleitung 84. Die Zuluftleitung 82 ist an den Zuluftstutzen 44 und die Abgasleitung 84 an den Abgasstutzen 60 angeschlossen. Die Zuluftleitung 82 befindet sich beispielsweise etwa 30 Zentimeter oberhalb der Grundfläche der Feuerstätte 80.

Der Anschluss eines erfindungsgemäßen Anschlussfußes 10 an eine Feuerstätte 80 wird nachfolgend beschrieben:
Der vormontierte Anschlussfuß 10 wird an der vorgesehenen Stelle auf den Boden aufgestellt. Durch eine Drehbewegung des Sockelelements 20 relativ zu dem Anschlussrohrelement 40 wandert der Zuluftstutzen 44 entlang des spiralförmigen Führungsschlitzes 24, so dass sich das Anschlussrohrelement 40 in vertikaler Richtung verschiebt. Das Sockelelement 20 wird so lange gedreht, bis der Zuluftstutzen 44 die gewünschte Höhe, also die Höhe des Zuluftanschlusses der anzuschließenden Feuerstätte 80, erreicht hat. Das Sockelelement 20 in Zusammenspiel mit der Abdeckhülse 30 verhindert ein Entweichen von Zuluft durch ungewollte Öffnungen im Zuluftrohr 12 bzw. Außenmantel, so dass die Zuluft gezielt dem Ofen zugeführt werden kann. Im montierten Zustand sitzt die Abdeckhülse 30 auf dem Boden oder dem Sockelbereich 28 auf und deckt den Führungsschlitz 24 ab. Vorzugsweise ist ein weitgehend gasdichter Verschluss des Zuluftrohres 12 realisiert. Nachdem das Anschlussrohrelement 40 mit dem Zuluftstutzen 44 in der gewünschten Höhe angeordnet ist, wird das Anschlussrohrelement 40 gegenüber dem Sockelelement 20 fixiert. Dies kann beispielsweise mittels selbstfurchender Schrauben erfolgen, wobei vorzugsweise in dem Anschlussrohrelement 40 entsprechende Zentrierlöcher vorgesehen sind. Vor oder nach der Justierung des Anschlussrohrelements 40 wird das Luft-Abgas-Rohrstück 50 hinsichtlich seiner Höhenlage an die Abgasleitung 84 der Feuerstätte 80 angepasst. Hierzu wird das Luft-Abgas-Rohrstück 50 gegenüber dem Anschlussrohrelement 40 axial verlagert. Anschlussrohrelement 40 und Luft-Abgas-Rohrstück 50 sind hierzu ineinander gesteckt und ermöglichen eine axiale Verlagerung zueinander. Das Luft-Abgas-Rohrstück 50 wird nun entweder gegenüber dem darüber liegenden Kaminrohr oder an dem Anschlussrohrelement 40 fixiert. Die Fixierung an dem Anschlussrohrelement 40 kann mittels geeigneter Befestigungsmittel, beispielsweise über selbstfurchende Schrauben erfolgen. Das Luft-Abgas-Rohrstück 50 weist hierzu vorzugsweise Zentrierlöcher für die Schrauben auf.

Wie zuvor beschrieben, lassen sich über den Anschlussfuß Feuerstätten mit unterschiedlichen Höhen ihrer Zuluft- und Abgasleitungen an ein Kaminsystem anschließen. Insbesondere lassen sich Feuerstätten mit rückseitigen Luft- und Rauchgasanschlüssen anschließen. Der Anschlussfuß ist insbesondere selbsttragend ausgeführt und trägt ein Kaminrohr, welches oben an das Luft-Abgas-Rohrstück angeschlossen ist, beispielsweise in einer Höhe bis zur Zimmerdecke. Insbesondere bilden das Sockelelement und das Anschlussrohrelement die statische Grundlage für den Schornstein, vorzugsweise bis zur Zimmerdecke. Der Zuluftstutzen lässt sich in einem weiten Bereich, beispielsweise von wenigen Zentimetern oberhalb des Bodens bis zu einer Höhe von beispielsweise einem halben Meter, verstellen.

### Bezugszeichenliste

- 5: Längsachse
- 10: Anschlussfuß
- 12: Zuluftrohr
- 20: Sockelelement
- 22: Rohrkörper
- 24: Führungsschlitz
- 28: Sockelbereich
- 30: Abdeckhülse
- 34: Durchtrittsschlitz
- 40: Anschlussrohrelement
- 42: Rohrkörper
- 44: Zuluftstutzen
- 50: Luft-Abgas-Rohrstück
- 52: Außenrohr
- 54: Innenrohr
- 56: Zuluftschacht
- 58: Abgasschacht
- 60: Abgasstutzen
- 62: Wärmeisolierschicht
- 80: Feuerstätte
- 82: Zuluftleitung
- 84: Abgasleitung

## Patentansprüche

1. Anschlussfuß für ein Kaminrohr, aufweisend
- ein Zuluftrohr (12) zum Zuführen von Zuluft und
- einen seitlich in das Zuluftrohr (12) einmündenden Zuluftstutzen (44) zum Anschließen einer Zuluftluftleitung (82) einer Feuerstätte (80),
wobei das Zuluftrohr (12) ein rohrförmiges Sockelelement (20) mit einem Sockelbereich (28) zum Abstützen an einer Bodenfläche und ein gegenüber dem Sockelelement (20) teleskopierbares Anschlussrohrelement (40) aufweist, an welchem der Zuluftstutzen (44) ausgebildet ist, **dadurch gekennzeichnet, dass** das Sockelelement (20) und das Anschlussrohrelement (40) über eine spiralförmige Führungseinrichtung miteinander gekoppelt sind, wobei das Sockelelement (20) drehbar gegenüber dem Anschlussrohrelement (40) gelagert ist und durch Drehen des Sockelelements (20) gegenüber dem Anschlussrohrelement (40) eine Höhenverstellung des Anschlussrohrelements (40) bewirkbar ist.

2. Anschlussfuß nach Anspruch 1,
**dadurch gekennzeichnet,**
**dass** das Sockelelement (20) eine Durchtrittsöffnung für den Zuluftstutzen (44) aufweist.

3. Anschlussfuß nach Anspruch 1 oder 2,
**dadurch gekennzeichnet,**
**dass** das Sockelelement (20) drehbar gegenüber dem Anschlussrohrelement (40) gelagert ist und einen spiralförmig ansteigenden Führungsschlitz (24) aufweist, in welchem der Zuluftstutzen (44) geführt ist.

4. Anschlussfuß nach Anspruch 3,
**dadurch gekennzeichnet,**
**dass** eine Abdeckhülse (30) vorgesehen ist, welche überlappend mit dem Sockelelement (20) angeordnet ist und einen quer zu dem Führungsschlitz (24) des Sockelelements (20) verlaufenden Durchtrittsschlitz (34) für den Zuluftstutzen (44) aufweist.

5. Anschlussfuß nach Anspruch 3 oder 4,
**dadurch gekennzeichnet,**
**dass** das Sockelelement (20) innerhalb des Anschlussrohrelements (40) angeordnet ist und
**dass** der Zuluftstutzen (44) von außen in den Führungsschlitz (24) des Sockelelements (20) hineinragt.

6. Anschlussfuß nach einem der Ansprüche 1 - 5,
**dadurch gekennzeichnet,**
**dass** oberhalb des Anschlussrohrelements (40) ein Luft-Abgas-Rohrstück (50) angeordnet ist, welches ein Außenrohr (52) zum Zuführen von Zuluft, ein Innenrohr (54) zum Abführen von Abgas und einen seitlich in das Innenrohr (54) einmündenden Abgasstutzen (60) zum Anschließen einer Abgasleitung (84) der Feuerstätte (80) aufweist.

7. Anschlussfuß nach Anspruch 6,
**dadurch gekennzeichnet,**
**dass** das Luft-Abgas-Rohrstück (50) gegenüber dem Anschlussrohrelement (40) axial verschiebbar gelagert ist.

8. Anschlussfuß nach einem der Ansprüche 6 oder 7,
**dadurch gekennzeichnet,**
**dass** ein zwischen dem Innenrohr (54) und dem Außenrohr (52) gebildeter Zuluftschacht (56) sich unterhalb des Innenrohrs (54) radial nach innen erweitert.

9. Verfahren zum Justieren eines Zuluftstutzens (44), welcher seitlich in ein Zuluftrohr (12) eines Anschlussfußes für ein Kaminrohr, insbesondere nach einem der Ansprüche 1 bis 8, einmündet, **dadurch gekennzeichnet, dass** das Verfahren umfasst das Drehen eines rohrförmigen Sockelelements (20) relativ zu einem Anschlussrohrelement (40), an welchem der Zuluftstutzen (44) ausgebildet ist, wobei das Sockelelement (20) und das Anschlussrohrelement (40) über eine spiralförmige Führungseinrichtung miteinander gekoppelt sind, so dass eine Höhenverstellung des Anschlussrohrelements (40) relativ zu dem Sockelelement (20) erfolgt.

## Claims

1. Connection foot for a chimney pipe, comprising
- a supply-air pipe (12) for feeding supply air and
- a supply-air stub (44) which opens laterally into the supply-air pipe (12) and is intended for the connection of a supply-air air line (82) of a fire-producing appliance (80),
wherein the supply-air pipe (12) has a tubular base element (20) with a base region (28) for supporting on a floor surface, and a connection pipe element (40) which is telescopable with respect to the base element (20) and on which the supply-air stub (44) is formed, **characterized in that**
the base element (20) and the connection pipe element (40) are coupled to one another via a helical guide device, wherein the base element (20) is mounted rotatably with respect to the connection pipe element (40) and a height adjustment of the connection pipe element (40) can be achieved by rotating the base element (20) with respect to the connection pipe element (40).

2. Connection foot according to Claim 1,
**characterized**
**in that** the base element (20) has a passage opening for the supply-air stub (44).

3. Connection foot according to Claim 1 or 2,
**characterized**
**in that** the base element (20) is mounted rotatably with respect to the connection pipe element (40) and has a helically rising guide slot (24) in which the supply-air stub (44) is guided.

4. Connection foot according to Claim 3,
**characterized**
**in that** a covering sleeve (30) is provided which is arranged in an overlapping manner with the base element (20) and has a passage slot (34) for the supply-air stub (44) that extends transversely with respect to the guide slot (24) of the base element (20).

5. Connection foot according to Claim 3 or 4,
**characterized**
**in that** the base element (20) is arranged inside the connection pipe element (40) and
**in that** the supply-air stub (44) projects from outside into the guide slot (24) of the base element (20).

6. Connection foot according to one of Claims 1-5,
**characterized**
**in that** an air/exhaust-gas pipe section (50) is arranged above the connection pipe element (40), said pipe section having an outer pipe (52) for feeding supply air, an inner pipe (54) for removing exhaust gas and an exhaust-gas stub (60) which opens laterally into the inner pipe (54) and is intended for the connection of an exhaust-gas line (84) of the fire-producing appliance (80).

7. Connection foot according to Claim 6,
**characterized**
**in that** the air/exhaust-gas pipe section (50) is mounted so as to be axially displaceable with respect to the connection pipe element (40).

8. Connection foot according to either of Claims 6 and 7,
**characterized**
**in that** a supply-air shaft (56) formed between the inner pipe (54) and the outer pipe (52) widens radially inwards below the inner pipe (54).

9. Method for adjusting a supply-air stub (44) which opens laterally into a supply-air pipe (12) of a connection foot for a chimney pipe, in particular according to one of Claims 1 to 8, **characterized in that** the method comprises the rotation of a tubular base element (20) relative to a connection pipe element (40) on which the supply-air stub (44) is formed, wherein the base element (20) and the connection pipe element (40) are coupled to one another via a helical guide device, with the result that a height adjustment of the connection pipe element (40) relative to the base element (20) is obtained.

## Revendications

1. Patte de raccordement pour un tube de cheminée, comportant
- un tube d'amenée d'air (12) pour l'alimentation en air entrant, et
- une tubulure d'amenée d'air (44) débouchant latéralement dans le tube d'alimentation d'air (12) et destinée à raccorder un conduit d'amenée d'air (82) d'un foyer (80),
dans laquelle le tube d'amenée d'air (12) comprend un élément formant socle (20) tubulaire muni d'une zone de socle (28) destinée à s'appuyer sur une surface de sol, et un élément de tube de raccordement (40) qui est télescopique par rapport à l'élément formant socle (20) et sur lequel est réalisée la tubulure d'amenée d'air (44),
**caractérisée en ce que**
l'élément formant socle (20) et l'élément de tube de raccordement (40) sont couplés l'un à l'autre par un dispositif de guidage de forme spiralée, et l'élément formant socle (20) est monté rotatif par rapport à l'élément de tube de raccordement (40) et un réglage en hauteur de l'élément de tube de raccordement (40) est réalisable par rotation de l'élément formant socle (20) par rapport à l'élément de tube de raccordement (40).

2. Patte de raccordement selon la revendication 1,
**caractérisée en ce que**
l'élément formant socle (20) présente une ouverture de passage pour la tubulure d'amenée d'air (44).

3. Patte de raccordement selon la revendication 1 ou 2,
**caractérisée en ce que**
l'élément formant socle (20) est monté rotatif par rapport à l'élément de tube de raccordement (40) et présente une fente de guidage (24) ascendant en forme spiralée dans laquelle est guidée la tubulure d'amenée d'air (44).

4. Patte de raccordement selon la revendication 3,
**caractérisée en ce que**
il est prévu une douille de recouvrement (30) qui est agencée en chevauchement avec l'élément formant socle (20) et qui comprend une fente de passage (34) s'étendant transversalement à la fente de guidage (24) de l'élément formant socle (20) et destinée à la tubulure d'amenée d'air (44).

5. Patte de raccordement selon la revendication 3 ou 4,
**caractérisée en ce que**
l'élément formant socle (20) est agencé à l'intérieur de l'élément de tube de raccordement (40) et
**en ce que** la tubulure d'amenée d'air (44) pénètre depuis l'extérieur dans la fente de guidage (24) de l'élément formant socle (20).

6. Patte de raccordement selon l'une des revendications 1 à 5,
**caractérisée en ce que**
un embout tubulaire (50) d'échappement d'air est agencé au-dessus de l'élément de tube de raccordement (40), qui présente un tube extérieur (52) pour amener de l'air d'alimentation, un tube intérieur (54) pour évacuer de l'air vicié et une tubulure d'échappement (60) qui débouche latéralement dans le tube intérieur (54) et qui est destinée à raccorder une conduite d'échappement (84) du foyer (80).

7. Patte de raccordement selon la revendication 6,
**caractérisée en ce que**
l'embout tubulaire (50) d'échappement d'air est monté avec faculté de translation axiale par rapport à l'élément de tube de raccordement (40).

8. Patte de raccordement selon l'une des revendications 6 ou 7,
**caractérisée en ce que**
un conduit d'amenée d'air (56) formé entre le tube intérieur (54) et le tube extérieur (52) va en s'évasant radialement vers l'intérieur au-dessous du tube intérieur (54).

9. Procédé d'ajustement d'une tubulure d'amenée d'air (44) qui débouche latéralement dans un tube d'amenée d'air (12) d'une patte de raccordement pour un tube de cheminée, en particulier selon l'une des revendications 1 à 8, **caractérisé en ce que** le procédé comprend la rotation d'un élément formant socle (20) tubulaire par rapport à un élément de tube de raccordement (40) sur lequel est réalisée la tubulure d'amenée d'air (44), l'élément formant socle (20) et l'élément de tube de raccordement (40) étant couplés l'un à l'autre par un dispositif de guidage de forme spiralée, de telle sorte qu'il se produit un réglage en hauteur de l'élément de tube de raccordement (40) par rapport à l'élément formant socle (20).
